# EUROPEAN PATENT APPLICATION

(11) **EP 3 939 458 A1**
(43) Date of publication of application: **19.01.2022**
(21) Application number: 20721279.6
(22) Date of filing: 10.03.2020
(51) Int. Cl.: A42B 3/04

(54) **PROTECTIVE DEVICE FOR PROTECTING A USER'S HEAD AND NECK AREA AGAINST AN IMMINENT IMPACT**

(30) Priority: 12.03.2019 ES 201930397 U
(71) Applicant: Evix Firm, S.L., 08329 Teià Barcelona (ES)
(72) Inventor: MILLET SOLANELLAS, Marc, 08329 Teià (Barcelona) (ES); OLEAGA ORTEGA, Nil, 08329 Teià (Barcelona) (ES); LLOBET CUSI, Lucas, 08329 Teià (Barcelona) (ES); FERNÁNDEZ TOMÁS, Alejandro, 08329 Teià (Barcelona) (ES)
(74) Representative: Pons
(86) International application number: PCT/ES2020/070171
(87) International publication number: WO 2020/183048

(57) **Abstract**

The present invention comprises a helmet (1) intended to surround the skull of a user (10); wherein the helmet (1) comprises a storage chamber (14) in a rear portion of the helmet (1), and which contains a pressurized gas; an activation mechanism to expand the expandable gas; at least one sensor (5), to detect an imminent accident; a bag (13) housed in the back of the helmet (1), connected to the compressed gas; and a control device (3), for inflating the bag (13) with the expanded pressurized gas moments before an accident detected by the sensor or sensors (5); wherein the bag (13), once inflated (2), emerges from the rear portion of the helmet (1), intended to protect the lateral area of the neck, the cervical area and the base of the skull.

## Description

### OBJECT OF THE INVENTION

The present invention discloses a protective device to protect the cranial, cervical and lateral area of the neck of a user against an impact or collision. More particularly, the present invention discloses a device comprising a helmet for cranial protection, having therein a bag that is inflated just before an impact, said bag emerging from the inside and expanding through the neck area and, consequently, providing protection against direct impact in the cervical, lateral area of the neck and cervical spine, as well as against sudden movements that may lead to cervical or spinal injury.

### BACKGROUND OF THE INVENTION

The use of certain devices for protecting the cranial and cervical area of a user against an impact is known in the state of the art.

For example, the patent application WO2019004919 by the applicant HOEVDING SVERIGE discloses a garment-shaped device that surrounds the neck of the user in the form of a collar. Said device, moments before an impact, is rapidly inflated and emerges towards the head, forming a helmet- or hood-shaped airbag and a collar, thus protecting the skull and cervical area. Said device describes the collar as a wearable garment, with the aim of not affecting the vision or hairstyle of the user of said product.

However, such a product has a number of disadvantages. The use thereof is incompatible with the use of a helmet, such that, if the control system or the impact detection sensors fail, the user does not even have a helmet so he will not be protected in the cranial area in the event of an accident.

Additionally, the device weighs approximately 700 grams, so the use thereof as a garment surrounding the neck as a collar is uncomfortable and heavy for some users in certain activities or sports.

Additionally, it is essential for the user to activate the control system and deactivate the control system every time he undertakes an activity and needs protection.

### DESCRIPTION OF THE INVENTION

The present invention seeks to solve some of the problems mentioned in the state of the art.

More particularly, the present invention discloses a protection device to protect the cranial and cervical area of a user against an imminent impact, comprising a helmet intended to surround the skull of the user; wherein the helmet comprises:
- an inner enclosure to house the skull,
- a storage chamber located in a rear portion of the helmet, and containing a pressurized gas,
- an activation mechanism, preferably pyrotechnic, to expand the pressurized gas from the storage chamber,
- at least one sensor to detect accidents or harmful movements,
- a bag housed in the inner enclosure and connected to the compressed gas, and
- a control device, connected to the activation mechanism, and to the sensor or sensors, to inflate the bag with the pressurized gas, expanded moments before an accident or harmful movement detected by the sensor or sensors,
- wherein the bag comprises portions configured, once inflated, to protrude from the inner enclosure, to cover and protect the lateral area of the neck, the cervical area and the base of the skull.

Preferably, the portions that comprise the bag, once inflated, cover and protect the cervical spine from vertebra C1 to vertebra C7, forming the portions of the bag that emerge from inside the helmet forming a cervical collar.

Preferably, once the sensor or sensors detect that there is going to be an accident or harmful movement, the control device activates the activation mechanism by means of an electronic stimulus, causing an expansion of the compressed gas, consequently, inflating the bag in a time in the order of milliseconds.

Therefore, by means of the device disclosed by the present invention, a helmet is used, very similar externally to that of conventional use, providing cranial protection, but further ensuring eventual protection of the cervical area in the event of an accident or harmful movement. Moreover, the user will have additional protection at the base of the skull. In this way, hyperflexion, hyperextension or lateralization of the neck and/or the cervical spine on any of the sides thereof is avoided.

The bag in the initial or deflated state thereof is preferably located at the back or rear portion of the inner enclosure of the helmet.

Additionally, the helmet may comprise a locking mechanism under the chin of the user by means of straps to fasten the helmet when it is used. Preferably, when the user secures the helmet by means of the locking mechanism, using the straps, the control device is automatically activated to control and monitor the variables measured by the detection sensors prior to an accident or harmful movement. Therefore, the user will not have to worry about activating or deactivating the protection device, which can lead to oversights, and in the event of an improbable sensor failure, he will still have the cranial protection provided by the helmet.

When the control device is turned on, by fastening the straps, it begins to take inertial values by means of the sensor or sensors. These readings are collected by the control device, which processes and detects them moments before a considerable accident or harmful movement is about to take place.

Preferably, the sensors for detecting a subsequent accident or harmful movement can be, among others, a plurality of accelerometers, inclinometers and gyroscopes.

The sensors may be located on the control device. However, said sensors can be located at different points or strategic areas distributed in the inner enclosure of the helmet outside the control device.

It must be observed that it is not necessary to have additional sensors in the moving vehicle, since these sensors will be in the helmet.

Preferably, the control device comprises at least a microprocessor, a radio frequency emitter and a battery. More preferably, the battery may be made of Lithiumpolymer.

Preferably, the helmet is reusable; consequently, the pressurized gas and airbags can be replaced.

The helmet can further comprise a multi-directional impact protection system (MIPS).

The helmet may have through holes to cool down the inner enclosure of the helmet. The helmet can have an aerodynamic design for use thereof in sports involving speed and with high aerodynamic resistance. However, the helmet can also be used in any sport, work, action and/or means of transport that requires the use of a helmet for improved cranial and cervical protection. Such as, for example, for using electric scooters, horseback riding, skiing, mobility, etc.

The helmet can have both rear and front lights to avoid rear-end collisions.

### DESCRIPTION OF THE DRAWINGS

As a complement to the description provided, and for the purpose of helping to make the features of the invention more readily understandable, in accordance with a practical preferred embodiment thereof, said description is accompanied by a set of drawings which, by way of illustration and not limitation, represent the following:
Fig. 1 shows a side view according to a preferred embodiment of the protection device to protect the cranial and cervical area of a user, wherein the helmet, the locking mechanism and the through holes are clearly shown.
Fig. 2 shows a diagram of the control device according to the preferred embodiment of Figure 1.
Fig. 3 shows a side view according to the embodiment of Figure 1, wherein the inflated bag before an accident or harmful movement is clearly shown, covering and protecting the cervical area of a user.

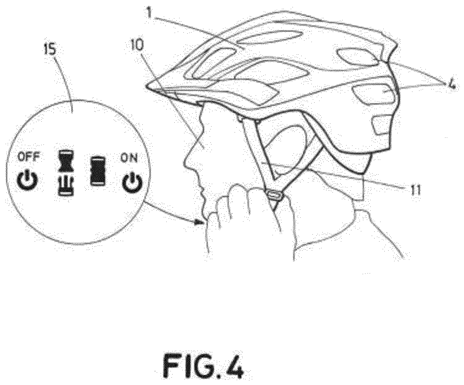

Fig. 4 shows a schematic view of the locking mechanism that automatically activates the control.

### PREFERRED EMBODIMENT OF THE INVENTION

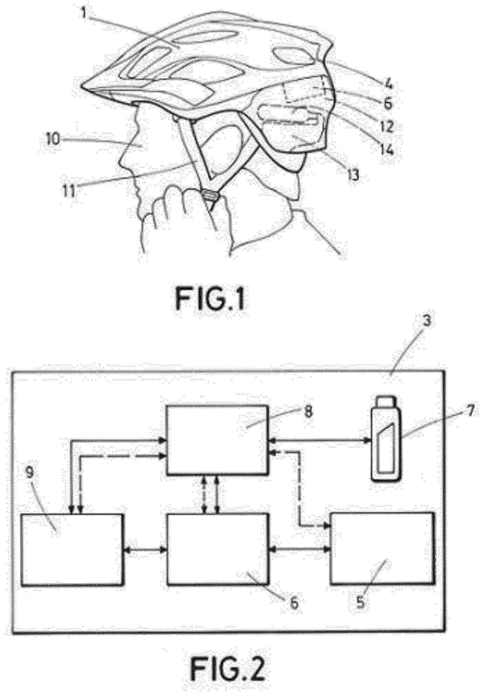

Figure 1 shows a side view of the protection device to protect the cranial and cervical area of a user (10), wherein the helmet (1) intended to surround the skull of the user (10) is clearly shown, said helmet comprising a storage chamber (14) in an inner enclosure thereof containing a pressurized gas and a deflated bag (13) connected to said pressurized gas and located in a housing (12) at the rear portion of the inner enclosure of the helmet (1).

Said helmet (1) also has a control system (3) therein, as shown in Figure 2. Said control system (3) is connected to a pyrotechnic activation system and further connected to a plurality of detection sensors (5) prior to an accident or harmful movement, as can be seen in Figure 2. For example, it is considered that an accident or harmful movement could be the loss of control of a bicycle by a cyclist, or a fall from the bicycle.

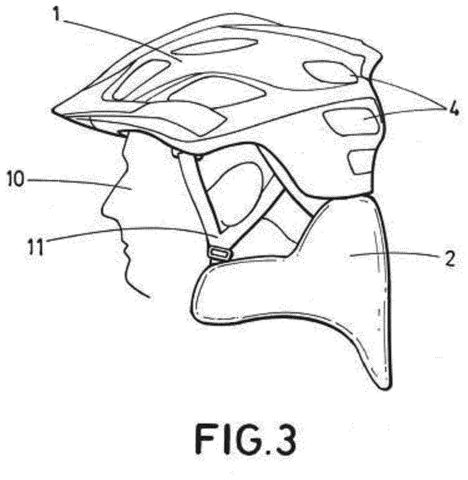

Once the sensor or sensors (5) detect that the imminent accident or harmful movement is about to occur, the control device (3) activates the pyrotechnic activation mechanism by means of an electronic stimulus, causing an exothermic chemical reaction expanding the compressed gas in the storage chamber (14), consequently, inflating the bag (13) as can be observed in Figure 3 once the inflated bag (2) is deployed, said bag (2) being inflated in milliseconds and further comprising portions configured, once inflated, to protrude from the helmet (1) to cover and protect the cervical area, the sides of the neck and the base of the skull. According to the present embodiment, the portions of the inflated bag (2) that emerge before the accident or harmful movement cover and protect from vertebra C1 to vertebra C7 of the user (10).

As shown in Figure 1, the helmet (1) comprises a locking mechanism (15) located under the chin of the user, which further comprises straps (11) intended to fasten the helmet (1) with respect to the skull, automatically activating, once locked, the control device (3).

Figure 2 shows a preferred embodiment of the control device (3) comprising a plurality of sensors (5), said sensors comprising at least accelerometers, magnetometers and gyroscopes. Said control device (3) further comprises a microprocessor (6), a battery (7), a unit for controlling and distributing the power (8) called PMU (Power Management Unit) and a user interface (9).

According to the described embodiment, the control device (3) is a PCB (printed circuit board) built into the helmet (1). The PMU (8) is in charge of managing the electrical consumption of the system. The main tasks are to generate the necessary voltage levels from a battery (7), to charge the battery (7) through a USB connector, to optimize system consumption by enabling or disabling the modules that are not being used at any particular time and to turn on the system by detecting that the locking mechanism (11) has been closed or fastened.

The microcontroller (6) is programmed with an algorithm capable of collecting all the necessary data coming from the sensors (5), processing this data and discerning between a false positive or an actual collision. In the event of a collision, the microcontroller (6) will be responsible, just before the accident or harmful movement, for sending a signal that will actuate the pyrotechnic activation mechanism that will expand the pressurized gas and inflate the cervical protection bag (13) in the order of milliseconds.

Additionally, the microcontroller (6) must control the user interface to notify the cyclist by means of LEDs, vibration and/or speaker values or variables that may be of interest to him. Finally, the sensors (5) or inertial measurement units will be constantly collecting data and communicating with the microcontroller.

The helmet (1) shown in Figure 1, according to a described preferred embodiment, has through holes (4) to cool down the inner enclosure of the helmet. Additionally, the helmet (1) has an aerodynamic design for sports involving high speed and with high aerodynamic resistance and will have both rear and front lights to avoid rear-end collisions or other types of accidents.

In the preferred embodiment, the helmet (1) is configured to allow the bag (13) to be replaced and the compressed gas to be reused once it has been expanded. Additionally, the helmet (1) is configured according to a multi-directional impact protection system (MIPS).

## Claims

1. A protection device to protect the cranial and cervical area of a user (10) before an imminent accident, comprising a helmet (1) intended to surround the skull of the user (10); wherein the helmet (1) comprises an inner enclosure to house the skull, **characterized in that** said helmet further comprises:
- a storage chamber (14) located in a rear portion of the helmet (1), and containing a pressurized gas,
- an activation mechanism to expand the expandable gas from the storage chamber (14),
- at least one sensor (5), to detect an imminent accident,
- a bag (13) housed in a housing (12) at the back of the helmet (1) and connected to the compressed gas, and
- a control device (3), connected to the activation mechanism, and to the sensor or sensors (5), to inflate the bag (13) with the pressurized gas expanded moments before an accident detected by the sensor or the sensors (5),
wherein the bag (13), once inflated (2), emerges from the rear portion of the helmet (1), with a curved configuration that has a central sector that extends along the bottom and laterally into lateral sectors intended to protect the lateral area of the neck, the cervical area and the base of the skull.

2. The protection device, according to claim 1, **characterized in that** the helmet (1) comprises a locking mechanism (14) located under the chin of the user (10), which further comprises straps (11) intended to fasten the helmet with respect to the skull.

3. The protection device, according to claim 2, **characterized in that** the locking mechanism (14) has connectors associated with the control device (3) that activate said control device (3) when the fastening of the locking mechanism (14) takes place.

4. The protection device, according to claim 1, **characterized in that** the helmet (1) is configured to allow the bag (13) to be replaced and the compressed gas to be reused once it has been expanded.

5. The protection device, according to claim 1, **characterized in that** the helmet (1) comprises through holes (4) to cool down the inner enclosure of the helmet.

6. The protection device according to claim 1, **characterized in that** the sensors (5) for detecting accidents comprise accelerometers, magnetometers and gyroscopes.

7. The protection device, according to claim 6, **characterized in that** the sensors (5) are located inside the control device (3).

8. The protection device according to claim 1, **characterized in that** the control device (3) comprises at least a microprocessor (6), a radio frequency emitter and a battery (7).

9. The protection device, according to claim 1, **characterized in that** the central sector and the lateral extensions of the bag (1), which emerge in the event of an accident, cover from vertebra C1 to vertebra C7 of the cervical area of the user (10).

10. The protection device, according to claim 1, wherein the activation mechanism is a pyrotechnic activation mechanism.
